# EUROPEAN PATENT APPLICATION

(11) **EP 2 653 921 A1**
(43) Date of publication of application: **23.10.2013**
(21) Application number: 13001850.0
(22) Date of filing: 10.04.2013
(51) Int. Cl.: G03B 21/28, H04N 5/74, G02B 13/24, G02B 27/18

(54) **Image projection apparatus**

(30) Priority: 16.04.2012 KR 20120039389
(71) Applicant: LG Electronics, Inc., Seoul, 150-721 (KR)
(72) Inventor: Park, Jun, Gyeonggi-Do (KR); Yeo, Sangok, Gyeonggi-Do (KR)
(74) Representative: Katérle, Axel

(57) **Abstract**

An image projection apparatus including a light source configured to generate a light bundle, a display element configured to form an image using the light bundle, and a projection system configured to magnify and project the image, and a first and a second aspherical lens whose curved surfaces facing each other are disposed to be recessed in opposite directions to each other, and a mirror reflecting a light bundle refracted in the first and the second aspherical lens toward the outside.

## Description

### BACKGROUND

### 1. Field

The present disclosure relates to an image projection apparatus for magnifying and projecting a generated image to the outside.

### 2. Background

Image projection apparatuses for magnifying and projecting a generated image are known. However, they suffer from various disadvantages.

### BRIEF DESCRIPTION OF THE DRAWINGS

The embodiments will be described in detail with reference to the following drawings in which like reference numerals refer to like elements wherein:

Figure 1 is a conceptual view illustrating the operation of an image projection apparatus according to an embodiment of the present disclosure;

Figures 2A and 2B are front and rear perspective views, respectively, illustrating an image projection apparatus in Figure 1;

Figure 3 is an exploded view illustrating an image projection apparatus in Figure 1;

Figure 4 is a conceptual view illustrating the path of a light bundle in a projection system in Figure 3;

Figures 5 and 6 are enlarged views illustrating portions A and B, respectively, of Figure 4;

Figure 7 is a conceptual view illustrating a modified example of an optical system associated with the present disclosure; and

Figure 8 is a conceptual view illustrating an image projection apparatus according to another embodiment of the present disclosure.

### DETAILED DESCRIPTION

With the rapid development of the information age, the importance of display devices for implementing a large screen has been emphasized. As an example of devices of implementing such a large screen, there is an image projection apparatus having a function of magnifying and projecting an image.

The image projection apparatus refers to an apparatus for implementing an image using light emitted from the light source, and projecting the implemented image, and the representative examples include a projector, a projection television, and the like.

In recent years, various new attempts have been made in terms of the performance of the image projection apparatus. One of those attempts is to implement a ultra short throw (UST) ratio optical system for projecting a large screen in the state of being located adjacent to the screen.

However, it may be difficult to shorten a distance between the projection apparatus and the screen with the existing optical systems, and in particular, may be very difficult to implement the image quality of full HD. Furthermore, when a large number of glass lenses (typically, above 20 sheets) are used to implement full HD, there exists a problem of increasing the size of an optical system.

The present disclosure is to implement an optical system for securing the optical performance of an image projection apparatus in spite of its compact configuration.

In order to accomplish the foregoing task, an image projection apparatus according to an embodiment of the present disclosure may include a light source configured to generate a light bundle, a display element configured to form an image using the light bundle, and a projection system configured to magnify and project the image, and may include a first and a second aspherical lens whose curved surfaces facing each other are disposed to be recessed in opposite directions to each other, and a mirror reflecting a light bundle refracted in the first and the second aspherical lens toward the outside.

As an example of the present disclosure, the first and the second aspherical lens may be included in an aspherical lens group for converging, diverging and emitting an incident light bundle.

The first and the second aspherical lens may be made to be brought into contact with each other at edges thereof. The first aspherical lens may be a concave lens and the second aspherical lens may be a convex lens. The recessed level of an incident surface of the second aspherical lens may be greater than that of an exit surface of the first aspherical lens.

As another example of the present disclosure, a lens group having a plurality of lenses to form a stop may be disposed between the display element and the first aspherical lens. The lens group may include a first spherical lens having an exit surface made of a spherical surface, and a second spherical lens having an incident surface with a curvature in the same direction as that of the exit surface of the first spherical lens and disposed adjacent to the first spherical lens.

In order to alleviate the effect of an air layer formed between the first and the second spherical lens, a clearance distance between the exit surface and the incident surface may be reduced as located close to the edge. The first and the second spherical lens may be disposed at a front side of the stop along the advancing direction of the light bundle.

As still another example of the present disclosure, a dummy glass may be disposed between the second aspherical lens and the mirror.

Hereinafter, an image projection apparatus associated with the present disclosure will be described in more detail with reference to the accompanying drawings. Even in different embodiments according to the present disclosure, the same or similar reference numerals are designated to the same or similar configurations, and the description thereof will be substituted by the earlier description. Unless clearly used otherwise, expressions in the singular number used in the present disclosure may include a plural meaning.

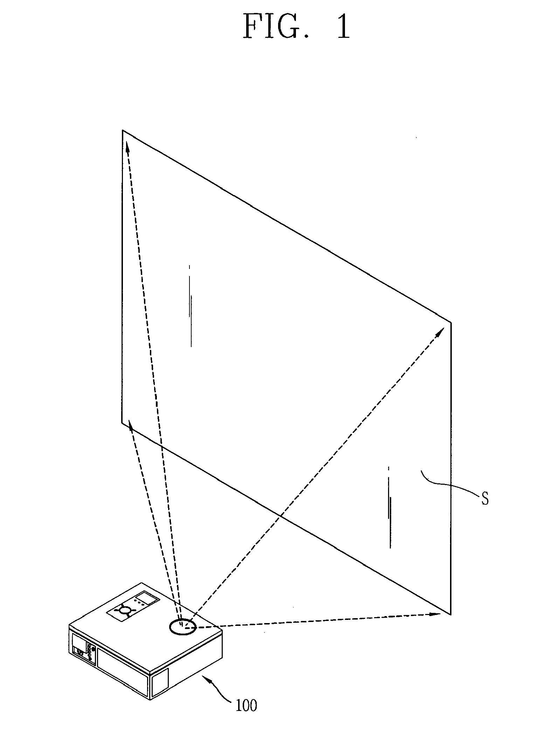

Figure 1 is a conceptual view illustrating the operation of an image projection apparatus according to an embodiment of the present disclosure.

An image projection apparatus 100 according to the present disclosure projects a large-sized screen image on a screen (S) in the configuration of being disposed at a very short distance from the screen (S).

As an apparatus for implementing an image using light generated from a light source and projecting the implemented image on the screen, the image projection apparatus 100 may be a projector or the like for magnifying and projecting an image as illustrated in the drawing. Hereinafter, the image projection apparatus 100 associated with the present disclosure will be described on the basis of a projector. However, the image projection apparatus 100 may not only be limited to this, but also applicable to a projection apparatus integrated into a projection television, and the like, for example. Hereinafter, according to the present specification, it will be described on the basis of a projector.

According to the drawing, the image projection apparatus 100 may be disposed adjacent to a lower end side (or upper end side) of the screen (S), and formed to realize a large-sized screen image on the screen (S) in this configuration.

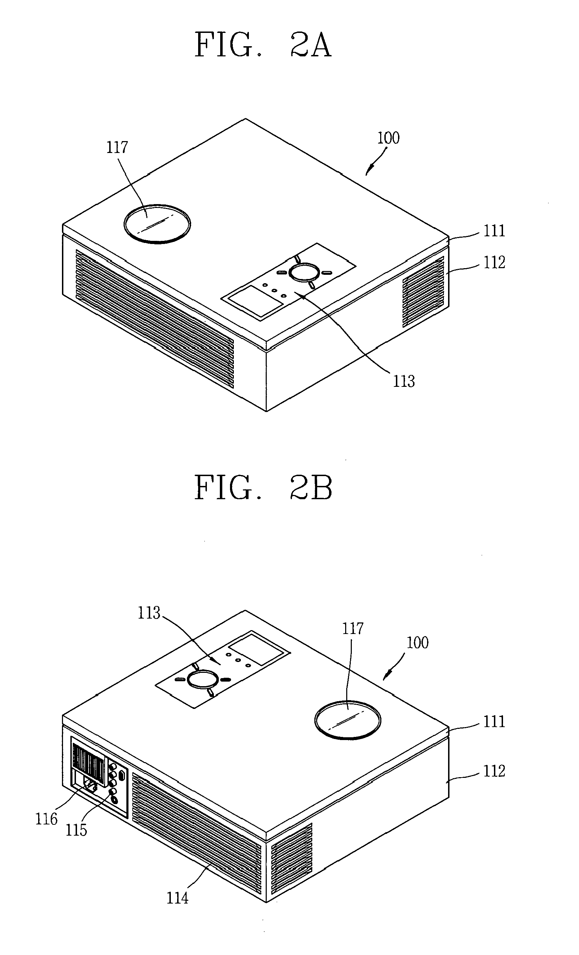

Here, an image projection apparatus capable of implementing such an operation will be described as an example. Figures 2A and 2B are front and rear perspective views, respectively, illustrating an image projection apparatus in Figure 1.

However, the constituent elements as illustrated in Figures 2A and 2B are not necessarily required, and the image projection apparatus 100 may be also implemented with greater or less number of elements than those illustrated elements.

Referring to the drawings, an external appearance of the image projection apparatus 100 may be formed by an upper and a lower case 111, 112. Various optical elements and electronic elements are integrated into a space formed by the upper and the lower case 111, 112. At least one middle case may be additionally disposed between the upper and the lower case 111, 112.

A manipulation unit 113 may be disposed at the upper case 111. Any method may be employed if it is a tactile manner allowing the user to perform manipulation with a tactile feeling.

The manipulation unit 113 receives a command for controlling the operation of the image projection apparatus 100. In the functional aspect, the manipulation unit 113 may be used to input a menu or the like such as start, end, and the like.

Furthermore, the manipulation unit 113 may be manipulated to perform a zoom-in or zoom-out operation on an image projected from the image projection apparatus 100. The manipulation unit 113 may be manipulated to focus an image projected from the image projection apparatus 100.

An air flow unit 114, an interface 115, and a power supply unit 116, and the like may be disposed at the lower case 112.

The air flow unit 114 may be made of a plurality of ventilation holes, thereby ventilating air into the inside of the image projection apparatus 100. Through this, it may be possible to implement the cooling of the image projection apparatus 100 using forced convection.

The interface 115 may be a path for allowing the image projection apparatus 100 to exchange data with external devices. Image data corresponding to an image to be projected from the image projection apparatus 100 may be received from the outside through the interface 115. Referring to the drawing, the interface 115 may include a connection terminal that can be electrically connected to an electronic device, such as a computer, a DVD player, or the like, capable of supplying image or audio data.

The power supply unit 116 is mounted in the lower case 112 for supplying power to the image projection apparatus 100. The power supply unit 116 may be formed to receive a household power source, which is alternating current power source, for example, and convert it into a direct current power source. However, the configuration of the power supply unit 116 may not only be limited to this, but also a rechargeable battery may be detachably combined therewith for charging or the like.

An audio output unit may be implemented in the form of a speaker in either one of the upper and the lower case 111, 112, and a broadcast signal receiving antenna or the like may be additionally disposed therein.

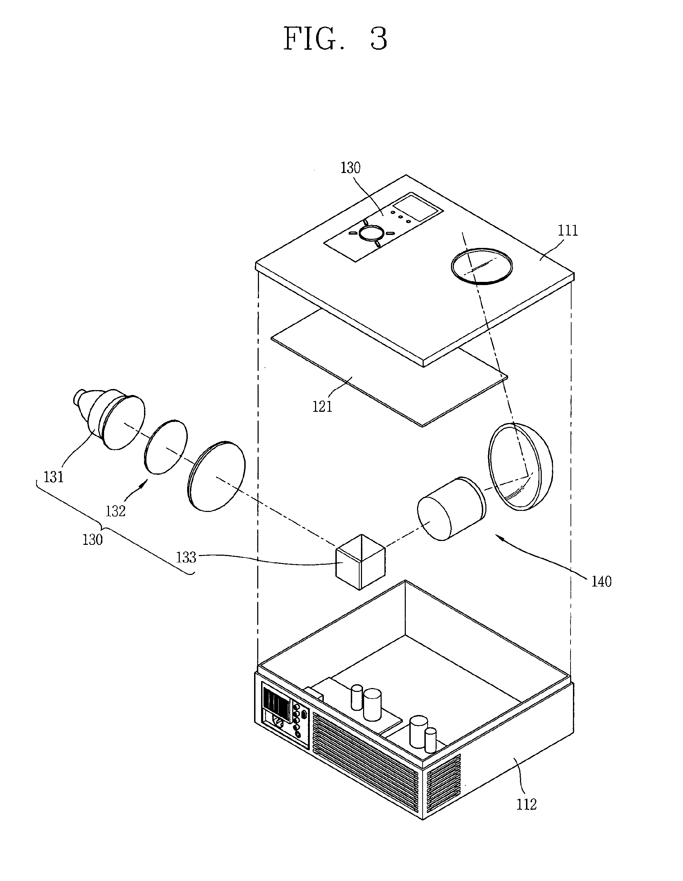

According to the drawing, the projection unit 117 is formed to project an image from an upper surface of the upper case 111 to the outside. For example, the projection unit 117 may include a projection system 140 (or projection optical system 140, refer to Figure 3) in which a plurality of lenses and mirrors are disposed with predetermined intervals. The projection unit 117 may be formed to adjust a distance between the plurality of lenses and mirrors by the manipulation of the manipulation unit 113. A zoom or focusing function of the image projection apparatus 100 may be implemented through this.

Hereinafter, the internal structure of the image projection apparatus 100 associated with the projection system 140 will be described in more detail with reference to Figures 3 through 6.

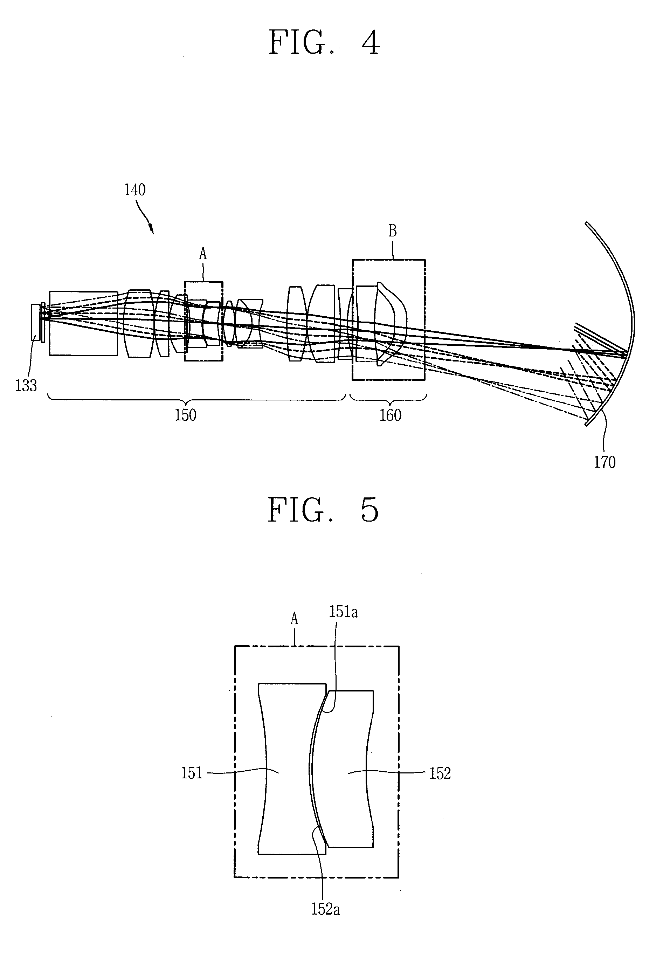

Figure 3 is an exploded view illustrating an image projection apparatus in Figure 1, and Figure 4 is a conceptual view illustrating the path of a light bundle in a projection system in Figure 3, and Figures 5 and 6 are enlarged views illustrating portions A and B in Figure 4.

As illustrated in the drawing, a control circuit board 121 may be mounted in the lower case 112. The control circuit board 12 may be configured as an example of the controller for operating various functions of the image projection apparatus 100.

Furthermore, an optical system 130 may be mounted in the lower case 112. The optical system 130 denotes a system of optical elements in which mirrors, lenses, and the like are properly disposed to implement the image of an object using light reflection or refraction in the image projection apparatus 100. A structure (not shown) into which the optical system 130 can be assembled may be additionally disposed between the optical system 130 and the lower case 112.

The optical system 130 may include an optical source 131, a lighting system 132, a display element 133, and a projection system 140.

The optical source 131 is formed to receive electrical energy and convert it into light energy, and generate a light bundle through this. The optical source 131 may be a ultra high voltage (UHV) lamp, a light emitting diode (LED), a laser diode (LD), and the like.

A stabilizer for stabilizing electricity supplied to the optical source 131, a cooling fan for generating forced convection, and the like may be mounted in the lower case 112 to assist the operation of the optical source 131.

The lighting system 132 may be formed to illuminate a light bundle generated from the optical source 131 on the display element 133. The display element 133 forms an image using the light bundle. More specifically, the display element 133 may be a reflective type display panel for reflecting a light bundle illuminated on an incident surface thereof to implement an image. Referring to the drawings, the incident surface of the display element 133 may be a rectangular shape.

The display element 133 may be a digital-controlled electronic element. The electronic element may include a plurality of micro mirrors that can be driven respectively. The plurality of micro mirrors reflect light in an independent manner to correspond to an image to be implemented. The electronic element may be a digital micromirror device (DMD) in which micro mirrors whose tilt angles are changed to ON or OFF state according to a control signal are arranged in a lattice structure on a plane, for example. Furthermore, the electronic element may be a liquid crystal on silicon (LCOS) panel that can reflect light to implement an image, among liquid crystal display devices.

The projection system 140 may be configured to magnify and project an image formed in the display element 133. Referring to Figures 4 through 6, the projection system 140 may include of a lens group 150, an aspherical lens group 160, and a mirror 170, and supports a full HD screen through this. However, even when the projection system 140 supports full HD, it may be difficult to solve the problem of increased overall size of a projector resulting from a large overall length of the projection system. According to the present disclosure, it may be possible to solve the problem through a shape of the lens group 150 and aspherical lens group 160 (also referred to herein as a lens assembly).

For a specific example, the lens group 150 may include a plurality of lenses forming a stop between the display element 133 and the aspherical lens group 160. The plurality of lenses may be spherical glass lenses, and disposed along a central axis of the projection system and configured with total of 11 sheets, for example.

According to the drawing, the lens group 150 may be configured to increase power around the stop. For example, the first and the second spherical lenses 151, 152 disposed adjacent to each other at a front side of the stop along the advancing direction of the light bundle are made such that curved surfaces facing each other have a curvature in the same direction.

Referring to Figures 4 and 5, the first spherical lens 151 has an exit surface 151a made of a spherical surface, and the second spherical lens 152 has an incident surface 152a having a curvature in the same direction as that of the exit surface 151 a of the first spherical lens. Furthermore, the curvatures are formed with different sizes to form a gap between the exit surface 151 a and the incident surface 152b. The first and the second spherical lenses 151, 152 may maintain an optical performance by the gap even with thermal deformation.

Furthermore, the first and the second spherical lenses 151, 152 are separated from each other by the gap, and an air layer is formed between the exit surface 151a and the incident surface 152b. According to the drawing, a clearance distance between the exit surface 151a and the incident surface 152b is reduced as located close to the edge to alleviate the effect of an air layer formed between the first and the second spherical lens 151, 152. Due to such a structure, a thickness of the air layer may be decreased, thereby alleviating a decrease of the optical performance due to the air layer, and securing the reliability and assembly tolerance to thermal deformation.

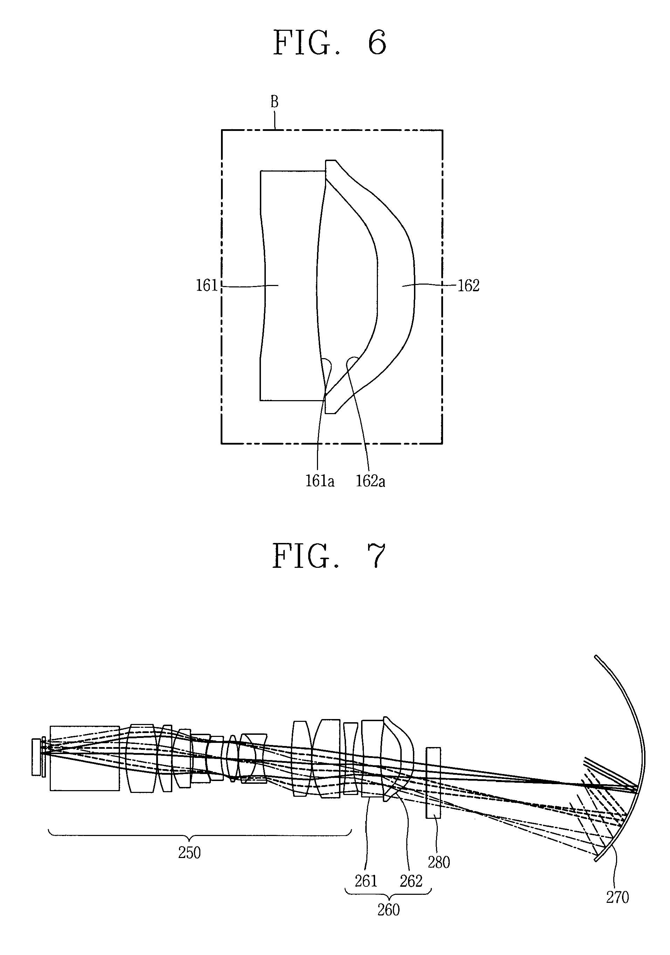

Referring to Figures 4 and 6, the aspherical lens group 160 may be formed to converge, diverge and emit an incident light bundle. For example, the aspherical lens group 160 may include a first and a second aspherical lens 161, 162 whose curved surfaces facing each other are disposed to be recessed in opposite directions to each other. The first and the second aspherical lens 161, 162 may be continuously disposed along a central axis of the projection system. The mirror 170 reflects the light bundle refracted in the first and the second aspherical lens 161, 162 toward the outside to implement a large-sized screen at a short distance. To this end, the mirror 170 may be formed of a concave mirror.

According to the drawing, the first aspherical lens 161 may be a concave lens having a plus power value and the second aspherical lens 162 may be a convex lens having a minus power value. Due to a structure in which aspherical surfaces of the concave and convex lenses facing each other are recessed in opposite directions to each other, it is seen that a distribution shape of power can be more efficiently maintained as illustrated in Figure 6.

Moreover, the first and the second aspherical lens 161, 162 may be formed such that the recessed level of an incident surface 162a of the second aspherical lens 162 is greater than that of an exit surface 161a of the first aspherical lens 161. Furthermore, the first and the second aspherical lens 161, 162 may be formed to be brought into contact with each other at edges thereof. Due to such a structure, it may be possible to allow an aspherical lens design which is insensitive to the tolerance. In particular, in order to secure the fabrication and assembly tolerance, the first aspherical lens 161 may be formed in a shape that curvatures at both edges are different from that at the center and symmetrical on the basis of the center. For example, similar to a shape in which a gull spreads her wings.

The foregoing projection system 140 may reduce the F-number using the shape of spherical lenses and/or aspherical lenses, thereby allowing the number of constituent elements to be 14 in total, for example, as well as enhancing the brightness.

As described above, the implementation of a full HD screen using the shape of spherical lenses and/or aspherical lenses may be modified in various forms. Hereinafter, according to modification examples or embodiments which will be described later, the same or similar reference numerals are designated to the same or similar configurations to the foregoing examples, and the description thereof will be substituted by the earlier description.

Figure 7 is a conceptual view illustrating a modified example of an optical system associated with the present disclosure, and only a projection system 240 is illustrated therein.

According to the drawing, a dummy glass 280 is disposed between a second aspherical lens 262 and a mirror 270. The dummy glass 280 may be substituted by a 3D filter during the implementation of 3D. In other words, an optical system for implementing a 2D image may be configured in a state that the dummy glass 280 is disposed therein, and the dummy glass 280 may be substituted by a 3D filter when the need arises, and as a result, a 3D image can be realized on the screen in the same or similar condition.

According to the drawing, spherical lenses or aspherical lenses may be formed in a symmetrical structure in the direction rotated on the basis of a central axis of the projection system, but the dummy glass 280 may be formed in a structure that is asymmetrical around the central axis of the projection system. In other words, the dummy glass 280 may have an eccentric value during optical design.

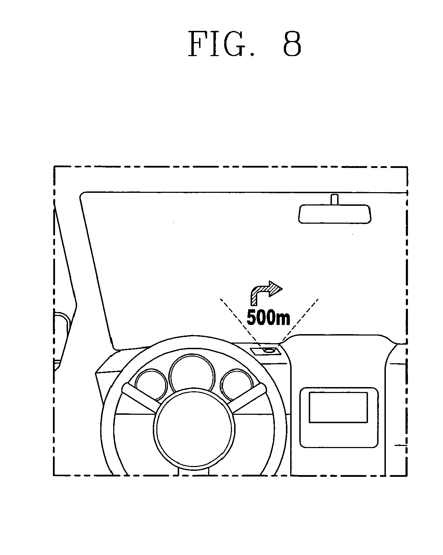

Figure 8 is a conceptual view illustrating an image projection apparatus according to another embodiment of the present disclosure.

According to the drawing, in an image projection apparatus according to the present disclosure, only an optical system may be configured with one product and integrated into an automobile or the like. In this case, the image projection apparatus may be configured to project a large-sized screen image on a windshield of the automobile.

As described above, according to the image projection apparatus, only an optical system may be additionally mounted in another commercial product, such as a mobile terminal, a laptop computer, a personal digital assistant (PDA), a portable multimedia player (PMP), a navigation, and the like. Through this, the image projection apparatus may provide a projector function to the commercial product.

As broadly described and embodied herein, an image projection apparatus may include an enclosure, a light source configured to generate a light bundle, a display element configured to generate an image which is projected using the light bundle, and a projection system configured to magnify and project the image. The projection system may include a first aspherical lens provided along a path of the light bundle, a second aspherical lens provided along the path of the light bundle, and a mirror configured to reflect the light bundle refracted through the first and the second aspherical lenses through the enclosure. Moreover, the first aspherical lens may include a first curved surface and the second aspherical lens includes a second curved surface, the first aspherical lens being positioned relative to the second aspherical lens such that the first curved surface of the first aspherical lens faces the second curved surface of the second aspherical lens, and wherein the first curved surface is curved in a first direction and the second curved surface is curved in a second direction opposite the first direction.

The projection system may include an aspherical lens group configured to converge, diverge and an incident light bundle, the aspherical lens group including the first aspherical lens and the second aspherical lens. An edge of the first aspherical lens may contact an edge of the second aspherical lens. The first aspherical lens may be a concave lens and the second aspherical lens is a convex lens. A depth of a recess of the second curved surface of the second aspherical lens may be greater than a depth of a recess of the first curved surface of the first aspherical lens. A curvature of the second curved surface of the second aspherical lens may be greater than a curvature of the first curved surface of the first aspherical lens. Moreover, a curvature of the second curved surface at an edge of the second aspherical lens is greater than a curvature of the second curved surface near a central axis of the second aspherical lens. The first curved surface of the first aspherical lens may be an incident surface for the light bundle and the second curved surface of the second aspherical lens is an exit surface for the light bundle.

A lens group may be disposed between the display element and the first aspherical lens, the lens group having a plurality of lenses configured to form a stop. The lens group may include a first spherical lens having a first surface having a spherical shape, and a second spherical lens having a second surface having a spherical shape, wherein the first surface of the first spherical lens and the second surface of the second spherical lens are curved in the same direction and disposed adjacent to each other. The first surface of the first spherical lens may be an exit surface for the light bundle and the second surface of the second spherical lens may be an incident surface for the light bundle.

A curvature of the first surface of the first spherical lens may be different than a curvature of the second surface of the second spherical lens. A distance between the first surface of the first spherical lens and the second surface of the second spherical lens may be less at a circumferential edge of the first and second spherical lenses than at a center of the first and second spherical lenses. The first and the second spherical lenses may be disposed before the stop in the path of the light bundle. Moreover, a dummy glass may be disposed between the second aspherical lens and the mirror.

In one embodiment, an image projection apparatus may include an enclosure, a light source configured to generate a light bundle along a prescribed path, a display element configured to form an image which is advanced by the light bundle, a lens group disposed after the display element along the path of the light bundle, the lens group having a plurality of lenses configured to form a stop, and a projection system provided after the lens group along the path of the light bundle and configured to magnify and project the image. The projection system may include an aspherical lens group configured to converge and diverge the light bundle, and a mirror provided to reflect the light bundle refracted in the aspherical lens group through the enclosure.

The projection system may include a first aspherical lens provided along the path of the light bundle and a second aspherical lens provided along the path of the light bundle. Here, the first aspherical lens includes a first curved surface and the second aspherical lens may include a second curved surface. The first aspherical lens may be positioned relative to the second aspherical lens such that the first curved surface of the first aspherical lens faces the second curved surface of the second aspherical lens. Moreover, the first curved surface may be curved in a first direction and the second curved surface may be curved in a second direction opposite the first direction.

An outer edge of the first aspherical lens may be formed to contact an outer edge of the second aspherical lens. The first aspherical lens may be a concave lens and the second aspherical lens may be a convex lens. An incident surface of the second aspherical lens may be recessed a greater amount than an exit surface of the first aspherical lens.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An image projection apparatus, comprising:
an enclosure;
a light source (131) configured to generate a light bundle;
a display element (133) configured to generate an image which is projected using the light bundle; and
a projection system (140) configured to magnify and project the image,
wherein the projection system includes a first aspherical lens (161, 162) provided along a path of the light bundle, a second aspherical lens provided along the path of the light bundle, and a mirror (170) configured to reflect the light bundle refracted through the first and the second aspherical lenses (161, 162) through the enclosure, and
wherein the first aspherical lens (161) includes a first curved surface and the second aspherical lens (162) includes a second curved surface, the first aspherical lens (161) being positioned relative to the second aspherical lens (162) such that the first curved surface of the first aspherical lens (161) faces the second curved surface of the second aspherical lens (162), and wherein the first curved surface is curved in a first direction and the second curved surface is curved in a second direction opposite the first direction.

2. The image projection apparatus of claim 1, wherein the projection system (140) includes an aspherical lens group (160) configured to converge, diverge and an incident light bundle, the aspherical lens group (160) including the first aspherical lens (161) and the second aspherical lens(162).

3. The image projection apparatus of claim 1 or 2, wherein an edge of the first aspherical lens (161) contacts an edge of the second aspherical lens (162).

4. The image projection apparatus of any one of claims 1 to 3, wherein the first aspherical lens (161) is a concave lens and the second aspherical lens (162) is a convex lens.

5. The image projection apparatus of any one of claims 1 to 4, wherein a depth of a recess of the second curved surface of the second aspherical lens (162) is greater than a depth of a recess of the first curved surface of the first aspherical lens (161).

6. The image projection apparatus of any one of claims 1 to 5, wherein a curvature of the second curved surface of the second aspherical lens (162) is greater than a curvature of the first curved surface of the first aspherical lens (161).

7. The image projection apparatus of claim 1, wherein a curvature of the second curved surface at an edge of the second aspherical lens (162) is greater than a curvature of the second curved surface near a central axis of the second aspherical lens (162).

8. The image projection apparatus of claim 1, wherein the first curved surface of the first aspherical lens (161) is an incident surface for the light bundle and the second curved surface of the second aspherical lens (162) is an exit surface for the light bundle.

9. The image projection apparatus of any one of claims 1 to 8, further including a lens group (150) disposed between the display element (133) and the first aspherical lens (161), the lens group (150) having a plurality of lenses configured to form a stop.

10. The image projection apparatus of claim 9, wherein the lens group (150) includes
a first spherical lens (151) having a first surface (151a) having a spherical shape; and
a second spherical lens (152) having a second surface (152a) having a spherical shape,
wherein the first surface of the first spherical lens and the second surface of the second spherical lens are curved in the same direction and disposed adjacent to each other.

11. The image projection apparatus of claim 10, wherein the first surface (151a) of the first spherical lens (151) is an exit surface for the light bundle and the second surface (152a) of the second spherical lens (152) is an incident surface for the light bundle.

12. The image projection apparatus of claim 10, wherein a curvature of the first surface (151a) of the first spherical lens (151) is different than a curvature of the second surface (152a) of the second spherical lens (152).

13. The image projection apparatus of claim 10, wherein a distance between the first surface (151 a) of the first spherical lens (151) and the second surface (152a) of the second spherical lens (152) is less at a circumferential edge of the first and second spherical lenses than at a center of the first and second spherical lenses.

14. The image projection apparatus of claim 10, wherein the first and the second spherical lenses (151, 152) are disposed before the stop in the path of the light bundle.

15. The image projection apparatus of any one of claims 1 to 14, wherein a dummy glass (280) is disposed between the second aspherical lens (152) and the mirror (170).
